# EUROPEAN PATENT APPLICATION

(11) **EP 0 955 232 A2**
(43) Date of publication of application: **10.11.1999**
(21) Application number: 99303614.4
(22) Date of filing: 10.05.1999
(51) Int. Cl.: B62K 5/00, B62M 23/02

(54) **Tricycle with electric motor**

(30) Priority: 08.05.1998 JP 14215798; 28.08.1998 JP 24302398
(71) Applicant: Kabushiki Kaisha Daiwa Sangyo, Nishi-ku, Osaka 550-0013 (JP)
(72) Inventor: Harada, Tomitaro, Kabushiki Kaisha Daiwa Sangyo, Nishi-ku, Osaka 550-0013 (JP); Kagawa, Ichiro, Kabushiki Kaisha Daiwa Sangyo, Nishi-ku, Osaka 550-0013 (JP); Iwakiri, Ryoji, Kabushiki Kaisha Daiwa Sangyo, Nishi-ku, Osaka 550-0013 (JP)
(74) Representative: Barnfather, Karl Jon, Dr.

(57) **Abstract**

A tricycle with an electric motor in which two rear wheels 4 and 4 are driven by not only an electric motor 5, but also pedals 6 with manpower. A rotational force of the pedals 6 is transmitted to drive means 9 via first bevel gears 8a and 9b and then transmitted to a one way clutch 7 via second bevel gears 10a and 10b from the drive means 9. The output of the one way clutch 7 is then transmitted to the two rear wheels 4 and 4.

## Description

The present invention relates to a tricycle with an electric motor in which two rear wheels are drivable not only by an electric motor having a battery but also by pedals with manpower, so as to be useable as a passenger tricycle or a cart.

Today, an electric car provided with a battery which does not have problems of exhaust, and a so-called hybrid vehicle with a gasoline engine and an electric motor are being developed, in view of protection of the environment of the earth, as substitutions of a car provided with an internal combustion engine which emits combustion exhaust.

In the above-mentioned tendency, a vehicle with an electric motor provided with a battery is going into a bicycle, a tricycle, a van, and so on.

The above-mentioned bicycle and the tricycle are provided with batteries and electric motors with an intention to utilise electric power when a load is heavy, namely, at a time of starting, or of uphill ride, etc. The applicant of this invention has suggested an electric vehicle, in which a tricycle is driven by electricity, in Japanese patent application no. 9-60009.

In that invention, the object is an electric vehicle of a hybrid-type in which electric power works mainly and pedal drive works subsidiarily. The tricycle driven in the above-mentioned manner, is basically constructed as follows. Namely, a front wheel is mounted rotatably on a front wheel frame and two rear wheels are mounted rotatably on a rear wheel frame. The rear wheel frame is mounted onto the front wheel frame to be rotatable about a longitudinal axis extending in forward and backward directions of the tricycle within a range of predetermined angles, so that it may easily turn the tricycle by inclining the front wheel frame on which a driver rides. Further, the two rear wheels are driven not only by an electric motor, but also by pedals with manpower, which pedals are mounted on the front wheel frame, via a one way clutch.

The above mentioned tricycle with an electric motor uses a chain drive system as power transmitting means, as normally used for a bicycle, in order to drive the rear wheels by means of the pedals under manpower.

The chain drive system had an advantage that up-and-down relative movements of the front wheel frame and the rear wheel frame could be absorbed (even if the both frames were rigid, the relative movements would rise due to flexible transformation of the frames), but it had the following problems.

Namely, in the case of the tricycle which has a wide spread compared to a bicycle, in order to make a small turn smoothly by using the two rear wheels which are not provided with inclining suspensions for wheels, there is no manner except that the rear wheel frame suspending the two rear wheels may be provided rotatably about a longitudinal axis extending in forward and backward directions within a range of predetermined angles, so as to incline or tilt the front wheel frame, on which a driver rides. Although such a construction has been used in the prior art, where the front wheel frame is inclined sufficiently at angles of 10 to 20 degrees in order to make a small turn, it frequently happens to cause such a trouble that the chain slips off from the sprockets.

If the inclination of the front wheel frame is controlled to a minimum in an attempt to evade such a trouble, the turning performance of the tricycle goes down greatly and a small turn cannot be smoothly carried out.

It is an object of the present invention to provide a tricycle with an electric motor which is superior in its turning performance while smoothly transmitting manpower in spite of inclination of a front wheel frame for a driver's seat.

In order to achieve the above object, the tricycle with an electric motor of the present invention in which a front wheel is rotatably mounted on a front wheel frame, and two rear wheels are rotatably mounted on a rear wheel frame which is mounted on the front wheel frame to tilt about a substantially longitudinal axis extending in the forward and backward directions of the tricycle within a range of predetermined angles, and the two rear wheels are driven by an electric motor mounted on the rear wheel frame and also driven with manpower by means of pedals which are mounted on the front wheel frame via a one way clutch, comprises first bevel gears connected to the pedals, drive means for transmitting a rotational force of the pedals via the first bevel gears, and second bevel gears connected to the one way clutch for transmitting the rotational force from the drive means, so as to transmit the rotational force through the one way clutch to the two rear wheels.

In the present invention, it is preferable that the drive means comprises a drive shaft or a wire cable.

Further, in the present invention, it is preferable that the tricycle further comprises a flexible bearing for supporting the front wheel frame rotatably with respect to the rear wheel frame within a range of predetermined angles, said flexible bearing including a housing fixed to the rear wheel frame, a casing supported in the housing to be rotatable via a flexible body, and a flexible bearing shaft holder engaged within the casing, wherein the drive shaft penetrates the casing and is supported by the flexible bearing shaft holder via a bearing.

Furthermore, in the present invention, it is preferable that the tricycle further comprises first belt drive means, differential gears for receiving the rotational force from the electric motor via the first belt drive means, and second belt drive means for transmitting an output of the one way clutch to the differential gears.

Another aspect of the invention provides a tricycle having a first wheel mounted on a front wheel frame having a pair of drivable pedals,
two rear wheels mounted on a rear wheel frame having an electric motor which operably drives the rear wheels,
which front and rear wheel frames are rotatable with respect to one another about a longitudinal axis through the tricycle, and
wherein drive means between the drivable pedals and the rear wheels comprises an elongate member having a first drivable end located proximal the pedals and a second driven end located proximal the rear wheels.

According to the present invention, the tricycle is drivable by both of electric power and manpower and yet it has an advantage of producing an excellent turning performance with a simple structural improvement while carrying out a sufficient manpower transmission. Therefore, it does not happen in the present invention that a chain used as drive means in the prior art, slips off.

The other advantages of the present invention will be apparent from the description of preferred embodiments based on the drawings which will be described in detail below.

The drawings show preferred embodiments of a tricycle with an electric motor according to the present invention in which:-
Fig. 1 is a side view of the tricycle according to the first embodiment,
Fig. 2 is a sectional plan view of a drive system of the tricycle according to the first embodiment,
Fig. 3 is a schematic plan view of the drive system of the tricycle according to the first embodiment,
Fig. 4 is a side view of the tricycle according to the second embodiment,
Fig. 5 is a plan view of a drive system of the tricycle according to the second embodiment,
Fig. 6 is a sectional plan view of an essential part of the drive system of the tricycle according to the second embodiment,
Fig. 7 is a sectional side view of a flexible bearing of the tricycle according to the second embodiment, and
Fig. 8 is a disassembled perspective view of an essential part of the flexible bearing of the tricycle according to the second embodiment

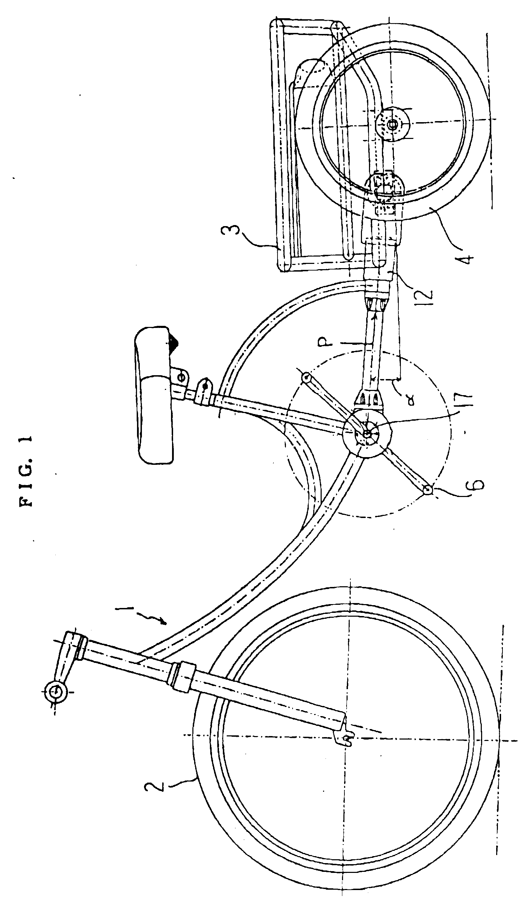

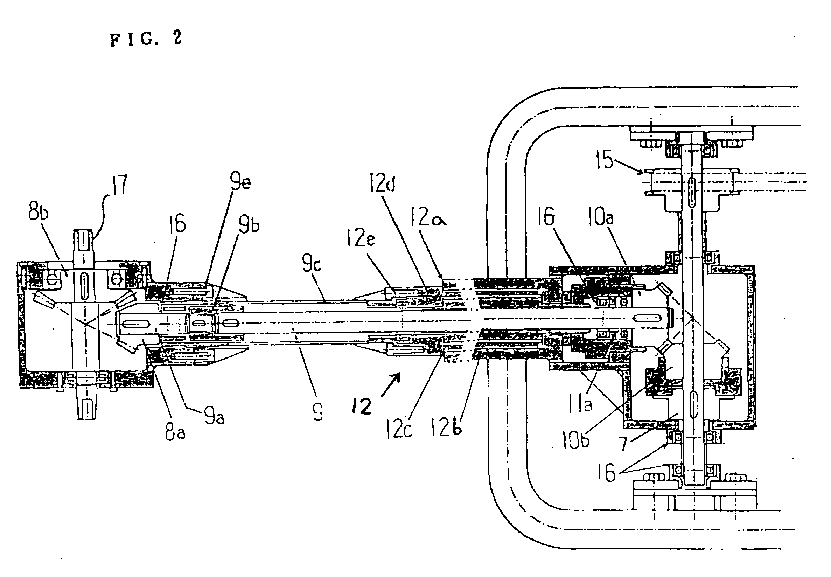

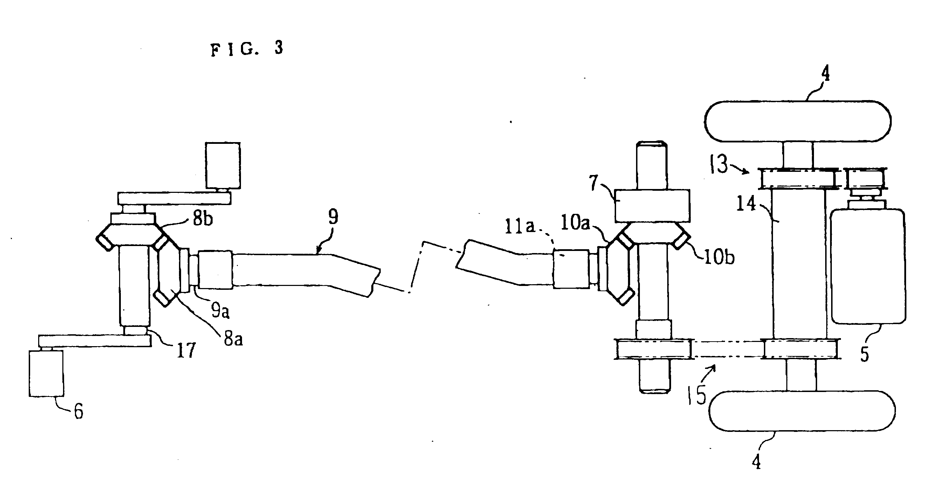

The first embodiment of a tricycle with an electric motor according to the present invention will be described on the basis of the drawings. Fig. 1 is a side view of the tricycle with an electric motor and Fig. 2 is a sectional plan view of its drive system and Fig. 3 is a schematic plan view of the drive system.

As shown in Figs. 1 through 3, the essential construction of the tricycle according to the present invention is that a front wheel 2 is rotatably mounted on a front wheel frame 1, and that two rear wheels 4 and 4 are rotatably mounted on a rear wheel frame 3. Further, the rear wheel frame 3 is mounted on the front wheel frame 1 to tilt about a substantially longitudinal axis P extending in the forward and backward directions of the tricycle within a range of predetermined angles, and the two rear wheels 4 and 4 are driven by an electric motor 5 mounted on the rear wheel frame 3 and also driven by pedals 6 with manpower which are mounted on the front wheel frame 1 via a one way clutch 7.

In the present invention, first bevel gears 8a and 8b, are connected to the pedals 6, so that a rotational force of the pedals 6 is transmitted to drive means 9 as a drive shaft via the first bevel gears 8a and 8b. The rotational force is then transmitted from the drive shaft 9 to second bevel gears 10a and 10b via the one way clutch 7. Therefore, when revolutions of the electric motor 5 exceeds revolutions of the pedals 6, it becomes possible to release its difference of the relative rotational speeds of the electric motor 5 and the pedals 6, by utilising the one way clutch 7. Namely, since the one way clutch 7 is provided with a drive system of the pedals 6, it is possible to use the one way clutch 7 in a range of low speeds in comparison to such a case that the one way clutch 7 is provided with a driving system of electric motor 5, and as a result, it may be possible to use the one way clutch 7 for a long period of time by restraining frictional wear of the clutch.

The drive shaft 9 is inclined downwardly at an angle of inclination ×, namely, at about 6 degrees in this embodiment, with respect to a substantially longitudinal axis P, and extending to the second bevel gears 10a and 10b. And, a thrust bearing 11a is provided for fixing backlash of the second bevel gear 10a which is fixed to the drive shaft 9.

Further, the first bevel gear 8a is fixed to an operation shaft 9a which is connected to the drive shaft 9 via a coupling 9b and a key mechanism.

The numeral 12 designates a flexible bearing, such as is known in Japan as a Loster (TM), which holds two members which are relatively rotatable, and its construction per se is well known in the field of this art. In this embodiment, a flexible bearing 12 is provided for supporting the front wheel frame 1 rotatably with respect to the rear wheel frame 3 within a range of predetermined angles, so that the front wheel frame 1 is tilted or inclined at a landing point of the front wheel 2 as a fulcrum with respect to the rear wheel frame 3. To obtain such a function, the flexible bearing 12 includes a housing 12a fixed to the rear wheel frame 3, a casing 12c supported in the housing 12a to be rotatable via a flexible body 12b, and a flexible bearing shaft holder 12d engaged with the casing 12c, wherein the drive shaft 9 penetrates the casing 12c and is supported by the flexible bearing shaft holder 12d via a bearing 12e.

An end of a shaft casing 9c fits into the flexible bearing shaft holder 12d and the other end thereof fits into a flange 9e which is fixed by bolts to a bearing of the operation shaft 9a of the first bevel gear 8a, thereby the shaft casing may cover the drive shaft 9 so as to rotate relatively with respect to the housing 12a together with flexible bearing shaft holder 12d and the casing 12c when the flexible bearing 12 rotates.

Accordingly flexible bearing 12 is an elongate bearing which allows rotation of shaft 9 and also relative tilting between the front and rear wheel frames.

As shown in Fig. 3, an output of the electric motor 5 is transmitted to differential gears 14 via first belt drive means 13 which comprises a belt and timing pulleys, and the output of the one way clutch 7 is transmitted to the differential gears 14 via second belt drive means 15 which is constructed in the same manner as the first belt drive means 13.

The numeral 16 shows a ball bearing respectively and the numeral 17 shows a crank shaft of the pedals 6.

In this embodiment, since the bevel gear mechanism is arranged in a narrow space near the crank shaft of the pedals 6, the first bevel gear 8a becomes one having a small diameter, but it is possible to use mitre gears (engaging ratio 1 to 1). Contrary to this, it is of course possible to use bevel gears having a different engaging ratio instead of using the mitre gears as the second bevel gear 10a.

Accordingly, by using the drive shaft 9 instead of chain drive system, in the event that the front wheel frame 1 (driver's seat) is inclined sufficiently (10 to 20 degrees) and then the tricycle makes a small turn, there is no chain to slip off from a sprocket as in the case of a chain drive system. Thus, a smooth and small turn may be carried out without trouble.

Further, by providing the flexible bearing 12 having the flexible body 12b for rotatably holding the drive shaft 9, it becomes possible to quickly carry out a returning action from the inclined posture of the front wheel frame 1 (returning of the driver's posture) by utilising deformation and returning functions of the flexible body 12b at the time of relative rotation of the front wheel frame 1 with respect to the rear wheel frame 3 within a range of predetermined angles. As a result, it may quickly return the driver's posture to a normal driving posture so as to easily carry out driving operations.

As the construction of the flexible bearing 12, since a middle portion of the drive shaft 9 in its longitudinal directions is supported, via the bearing 12e, by means of the flexible bearing shaft holder 12d, which is fit into the casing 12c, it becomes possible not only to allow the above-mentioned relative rotation, but also to prevent vibration of the drive shaft 9 so as to smoothly carry out a small turn of the tricycle.

Furthermore, since the output of the electric motor 5 is transmitted to the differential gears 14 via the first belt drive means 13, and the output of the one way clutch 7 is transmitted to the differential gears 14 via the second belt drive means 15, when revolutions of the electric motor 5 exceeds revolutions of the pedals 6, it becomes possible to release its difference in the relative rotational speeds between the electric motor 5 and the pedals 6, by utilising the one way clutch 7. Namely, since the one way clutch 7 is provided with a drive system of the pedals 6, it is possible to use the one way clutch 7 in a range of low speeds in comparison to such a case that the one way clutch 7 is provided with a driving system of electric motor 5, and as a result, it may be possible to use the one way clutch 7 for a long period of time by restraining frictional wear of the clutch.

In the present invention, it is possible to carry out change-over of drive and stop by the electric motor 5, and drive by the pedals 5, on the basis of the rotational speed of the rear wheels or the speed of the tricycle, or its change-over may be carried out independently regardless of the revolution of the rear wheels or the speed of the tricycle. Namely, it is not an essential point of this invention to choose which way is to be taken, and it may be chosen at discretion.

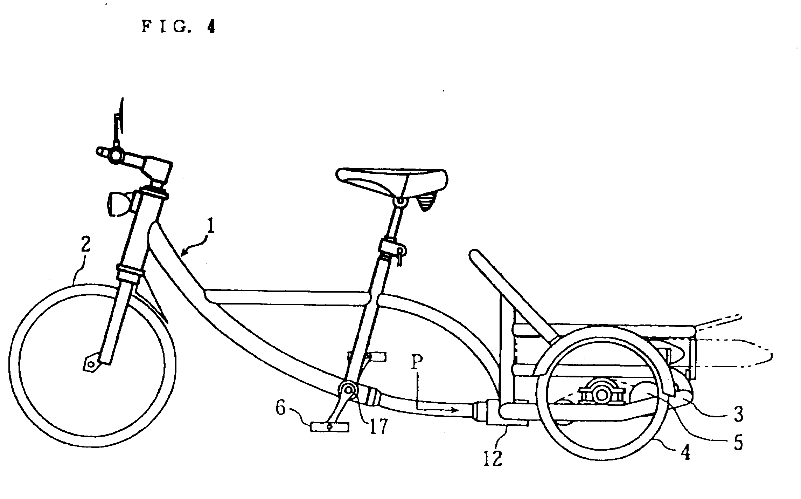

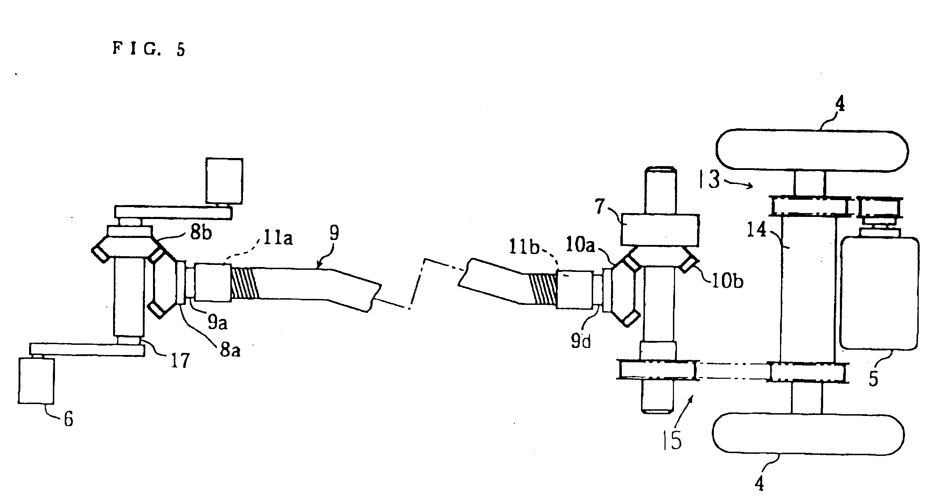

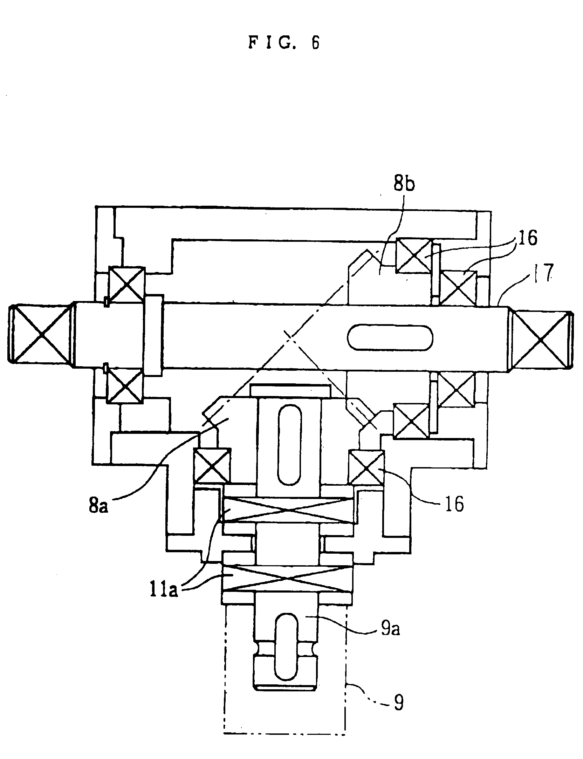

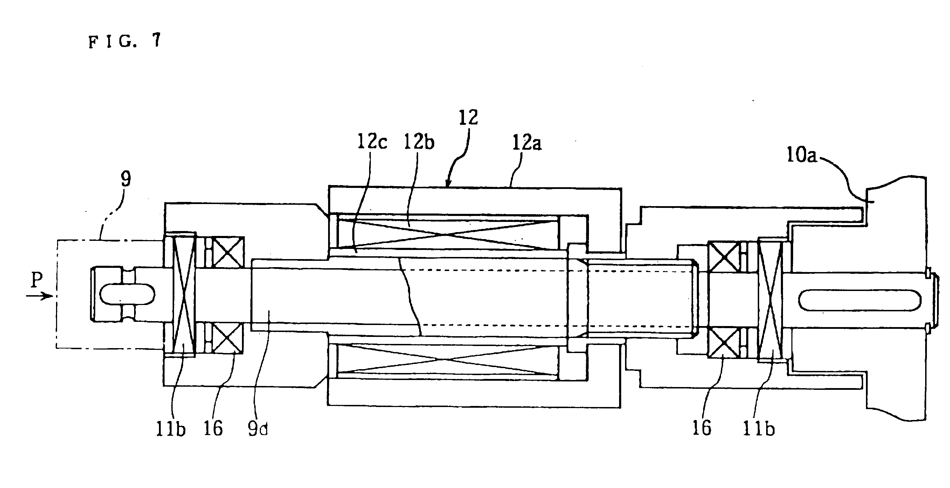

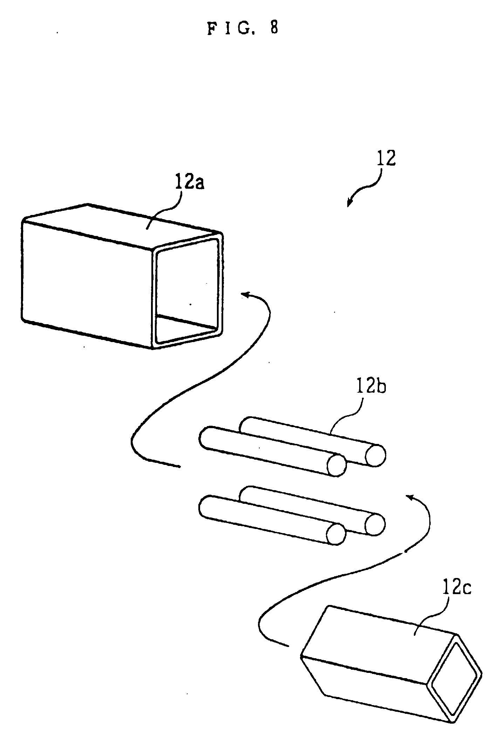

Next, the second embodiment of this invention will be described in detail with reference to the Figs. 4 through 8, as follows.

The tricycle with an electric motor in this embodiment is constructed basically in the same manner as the first embodiment. Namely, the tricycle with an electric motor comprises a front wheel 2 rotatably mounted on a front wheel frame 1, and two rear wheels 4 and 4 rotatably mounted on a rear wheel frame 3 which is mounted on the front wheel frame 1 to tilt about a substantially longitudinal axis P extending in the forward and backward directions of the tricycle within a range of predetermined angles, and the two rear wheels 4 and 4 being driven by an electric motor 5 mounted on the rear wheel frame 3 and also driven by pedals 6 with manpower which pedals are mounted on the front wheel frame 1 via a one way clutch 7.

It is constructed such that a rotational force of the pedals 6 is transmitted to a wire cable 9 as drive means via first bevel gears 8a and 8b which is connected to the pedals 6. Although the wire cable 9 may transmit a rotational force of the pedals 6 sufficiently, it is not necessary to provide a universal joint in the case of a shaft drive system since the wire cable 9 per se has flexibility.

Rotation of the wire cable 9 is transmitted to the one way clutch 7 via second bevel gears 10a and 10b and the output of the one way clutch 7 is transmitted to the two rear wheels 4 and 4 via second belt drive means 15, which will be referred to hereinafter.

Therefore, when the rotation of the electric motor 5 exceeds that of the pedals 6, the one way clutch 7 may release the difference in relative rotational speed between the electric motor 5 and the pedals 6. Namely, since the one way clutch 7 is provided with a driving system of the pedals 6, it becomes possible to use the one way clutch 7 in a range of low speeds in comparison to such a case that the one way clutch 7 is provided with a driving system of electric motor 5, and as a result, it becomes possible to use the one way clutch 7 for a long period of time while controlling frictional wear of the clutch.

Thrust bearings 11a and 11b are provided for fixing backlash of each of the first bevel gears 8a and the second bevel gear 10a which are fixed to operation shafts 9a and 9d respectively, which are connected to the wire cable 9.

The operation shaft 9d connected to the wire cable 9 is supported by the rear wheel frame 3 via a flexible bearing 12 to be rotatable within a range of predetermined angles. The flexible bearing 12 comprises a housing 12a which is fixed to the rear wheel frame 3, and a casing 12c supported rotatably in the housing 12a via a flexible body 12b, and the operation shaft 9d penetrates the casing 12c.

Further, it is so constructed that an output of the electric motor 5 is transmitted to differential gears 14 via first belt drive means 13, and the output of the one way clutch 7 is transmitted to the differential gears 14 via second belt drive means 15 which is constructed in the same manner as the first belt drive means 13. In this embodiment, the first bevel gears 8a and 8b and the second bevel gears 10a and 10b are preferably mitre gears, namely each of their engaging ratios engaging ratios is 1 to 1.

In the drawing, the numeral 16 each designates a bearing and the numeral 17 shows a crank shaft of the pedals 6.

## Claims

1. A tricycle with an electric motor in which a front wheel (2) is rotatably mounted on a front wheel frame (1) and two rear wheels (4 and 4) are rotatably mounted on a rear wheel frame 3 which is mounted on the front wheel frame (1) to tilt about a substantially longitudinal axis (P) extending in the forward and backward directions of the tricycle within a range of predetermined angles, and the two rear (4 and 4) are drivable by an electric motor (5) mounted on the rear wheel frame (3) and also by pedals (6) under manpower, which pedals are mounted on the front wheel frame 1 and via a one way clutch 7, said tricycle comprising:
first bevel gears (8a and 8b), connected to the pedals (6),
drive means for transmitting a rotational force of the pedals (6) via the first bevel gears (8a and 8b), and
second bevel gears (10a and 10b), connected to the one way clutch (7) for transmitting the rotational force from the drive means, so as to transmit the rotational force of the one way clutch (7) to the two rear wheels (4 and 4).

2. The tricycle with an electric motor as defined in claim 1 wherein the drive means comprises a drive shaft (9).

3. The tricycle with an electric motor as defined in claim 1 wherein the drive means comprises a wire cable.

4. The tricycle with an electric motor as defined in any one of claims 1 to 3, further comprising a flexible bearing (12) for supporting the front wheel frame (1) rotatably with respect to the rear wheel frame (3) within a range of predetermined angles, said flexible bearing (12c) including a housing (12a) (12a) to be rotatable via a flexible body (12b), and a flexible bearing shaft holder (12d) engaged with the casing (12c), wherein the drive shaft (9)fixed to the rear wheel frame (3), a casing (12) supported in the housing penetrates the casing (12c) and is supported by the flexible bearing shaft holder (12d) via a bearing (12e).

5. The tricycle with an electric motor as defined in claims 1 to 4, further comprising:
first belt drive means (13),
differential gears (14) for receiving the rotational force from the electric motor (5) via the first belt drive means (13), and
second belt drive means (15) for transmitting an output of the one way clutch (7) to the differential gears (14).

6. A tricycle having a first wheel mounted on a front wheel frame having a pair of drivable pedals,
two rear wheels mounted on a rear wheel frame having an electric motor which operably drives the rear wheels,
which front and rear wheel frames are rotatable with respect to one another about a longitudinal axis through the tricycle, and
wherein drive means between the drivable pedals and the rear wheels comprises an elongate member having a first drivable end located proximal the pedals and a second driven end located proximal the rear wheels.

7. A tricycle according to claim 6 having a bevel gear arrangement for communicating drive between the pedals and the first end of the elongate member.

8. A tricycle according to claim 6 or 7 comprising a bevel gear arrangement for communicating drive between the second end of the elongate member and the rear wheels.

9. A tricycle according to claim 6, 7 or 8 comprising a clutch in the drive path between the elongate member and the rear wheels.

10. A tricycle according to claim 9 wherein the clutch is a one way clutch.
